# EUROPÄISCHE PATENTSCHRIFT

(11) **EP 1 066 182 B1**
(45) Veröffentlichungstag und Bekanntmachung des Hinweises auf die Patenterteilung: **17.12.2003**
(21) Anmeldenummer: 98958921.3
(22) Anmeldetag: 26.11.1998
(51) Int. Cl.: B60T 8/40, H02K 7/14

(54) **ROTORLAGERUNG FÜR EIN MOTORPUMPENAGGREGAT**
ROTOR MOUNTING FOR A MOTOR PUMP AGGREGATE
SUPPORT DE ROTOR POUR ENSEMBLE MOTOPOMPE

(30) Priorität: 27.11.1997 DE 19752486; 05.12.1997 DE 19753908; 14.02.1998 DE 19806077
(43) Veröffentlichungstag der Anmeldung: 10.01.2001
(73) Patentinhaber: Continental Teves AG & Co. oHG, 60488 Frankfurt (DE)
(72) Erfinder: REINARTZ, Hans-Dieter, D-60439 Frankfurt am Main (DE); BARTSCH, Thomas, D-65527 Niedernhausen (DE); DINKEL, Dieter, D-65817 Eppstein (DE)
(86) Internationale Anmeldenummer: EP9807618
(87) Internationale Veröffentlichungsnummer: WO99028174

(56) Entgegenhaltungen:
- DE-A- 4 444 646
- DE-C- 19 608 267
- US-A- 5 802 837
- PATENT ABSTRACTS OF JAPAN vol. 012, no. 337 (E-657), 12. September 1988 & JP 63 099742 A (MITSUI ENG & SHIPBUILD CO LTD), 2. Mai 1988

## Beschreibung

Die Erfindung betrifft eine Rotorlagerung für ein Motorpumpenaggregat zum Einsatz in geregelten Bremsensystemen für Kraftfahrzeuge.

Rotorlagerungen für die Lagerung des Rotors eines Motorpumpenaggregates für den Einsatz in geregelten Bremsensystemen in Kraftfahrzeugen sind im Stand der Technik mehrfach bekannt.

Die bekannten Rotorlagerungen sind als Zweipunktlagerungen mit einem Fest- und einem Loslager aufgebaut.
Die DE 44 33 970 A1 zeigt eine Rotorlagerung eines Motorpumpenaggregates, die aus zwei Kugellagern aufgebaut ist. Das Loslager ist motorseitig angeordnet, wobei der Innenring eines Kugellagers auf die stufenlose Welle des Rotors aufgepreßt und der Außenring im Gehäuse des Motors angeordnet ist. Das Festlager ist pumpenseitig angeordnet. Das Pumpengehäuse weist hierzu eine Stufenbohrung auf, in der das Kugellager eingesetzt ist. Der Innenring des Kugellagers ist auch hier auf die stufenlose Welle aufgepreßt. Der Außenring des Lagers sitzt mit einer Seite auf der Stufe der Stufenbohrung im Pumpengehäuse auf und wird auf der entgegengesetzten Seite durch einen Deckel fixiert.

Der Aufbau dieser Lagerung erfordert einen erheblichen Fertigungsaufwand für Welle und Pumpengehäuse. Um die Innenringe der Lager an den Lagerstellen der Welle aufpressen zu können, muß die Welle hochgenau mit hoher Oberflächengüte hergestellt werden. Das Pumpengehäuse muß zusätzlichen Zerspanungsschritten zur Fertigung der Stufenbohrung und zur Herstellung einer feinen Oberflächengüte der Stufenbohrung zum Einpressen des Lagers unterzogen werden. Die genannten Fertigungsmaßnahmen tragen im hohen Maße zu den Kosten eines Motorpumpenaggregates bei. Der Einsatz zweier Rillenkugellager zur Lagerung des Rotors eines Motorpumpenaggregates wirkt sich zusätzlich nachteilig auf den Volumenbedarf und das Eigengewicht des Aggregates aus.

In der DE 42 35 962 A1 wird eine weitere Variante zur Lagerung des Rotors eines Motorpumpenaggregates aufgezeigt. In dieser Ausführung wird das Loslager auf der Motorseite durch ein Gleitlager in Kalottenform ersetzt. Das pumpenseitige Festlager ist als Rillenkugellager ausgeführt und weist somit die gleichen Nachteile wie die Lageranordnung in der erstgenannten Veröffentlichung auf. Das eingesetzte Gleitlager für die Loslagerung bewirkt nur einen Vorteil auf der Materialkostenseite und eine Gewichtsersparnis ,da die Fertigungsprozesse der Welle zum Aufpressen der Kalotte auf die Welle mit den Fertigungsprozessen für die Montage eines Rillenkugellagers vergleichbar sind.

Aus der JP-A-6399742 ist eine Rotorlagerung für einen elektrischen Motor bekannt. Der Motor umfasst zwei statorfest angeordnete elektrische Wicklungen sowie eine Rotorwelle, welche mit zwei Satz Permanentmagneten versehen ist. Der Rotorlagerung dienen in Radialrichtung zwei Wälzlager. Zur berührungslosen Lagerung in axialer Richtung dient ein gesonderter Elektromagnet. Für den Fall, daß die Wirkung des Elektromagnets nicht ausreicht, übernimmt eines der Wälzlager die Kraftübertragung.

Die Aufgabe der Erfindung besteht darin , eine gewichts- und kostensparende Lösung zur Lagerung des Rotors eines Motorpumpenaggregates anzubieten.

Die Erfindung löst die Aufgabe durch die Kombination der Merkmale des Anspruchs 1. Die Erfindung sieht hierzu getrennte Lagerstellen zur Aufnahme von Radial- und Axialkräften vor. Die Lager zur Aufnahme von Radialkräften werden hierzu am Umfang der Rotorwelle angeordnet. Als Lager kommen hier leichte und billige Gleitlager oder Nadelringe zur Anwendung.

Die auf die Welle wirkenden axialen Kräfte werden im normalen Betrieb des Motorpumpenaggregats durch den magnetischen Zug der Permanentmagnete des Motors auf den Rotor abgefangen. Der Rotor des Motorpumpenaggregats ist somit schwimmend in axialer Richtung im Magnetfeld des Elektromotors gelagert. Eine Berührung der Einzelteile im Normalbetrieb des Motorpumpenaggregats wird durch entsprechend tolerierte Abstände der Einzelteile in axialer Richtung ausgeschlossen. Axial auf die Welle wirkende Kräfte, die beim Auftreten von Spitzenbelastungen eine Verschiebung des Rotors über seinen axialen Freiheitsgrad hinaus bewirken, werden mittels Anlaufelementen aufgefangen. Diese Anlaufelemente sind vorzugsweise entweder an den oberen und unteren wellenenden oder im Pumpengehäuse angeordnet.

Die aufgezeigte Lagerung des Rotors für Motorpumpenaggregate stellen vorteilhafterweise aufgrund ihres berührungslosen Aufbaus einen geräuschdämpfenden und verschleißarmen Betrieb sicher.

Eine weitere vorteilhafte Lagerungsmöglichkeit wird im Anspruch 7 aufgezeigt. Die axiale Lagerung der Rotorwelle wird durch eine Punktberührung eines Endes der starren Achse und des pumpenseitigen Rotorwellenendes und einer Punktberührung des zweiten Rotorwellenendes und eines konvex geformten Federelementes aufgebaut. Die Federkraft des Elementes bewirkt vorteilhafterweise eine spielfreie Lagerung.

Aufgrund des geringen Fertigungsaufwands und des Einsatzes einfacher Teile, stellt die Erfindung eine Kostengünstige und gewichtssparende Alternative einer Rotorlagerung für ein Motorpumpenaggregat dar. Die kostengünstige und gewichtssparende Ausführung der Rotorlagerung prädestiniert ihren Einsatz in Aggregaten für geregelte Bremsensysteme in Kraftfahrzeugen.

Weitere Vorteile werden anhand zweier Ausführungsbeispiele der Erfindung nachfolgend durch Zeichnungen erläuterte Darin zeigen:
- Fig. 1: einen Querschnitt durch eine schwimmende Rotorlagerung eines Motorpumpenaggregats.
- Fig.2: einen Querschnitt durch eine spielfreie Rotorlage rung eines Motorpumpenaggregats.

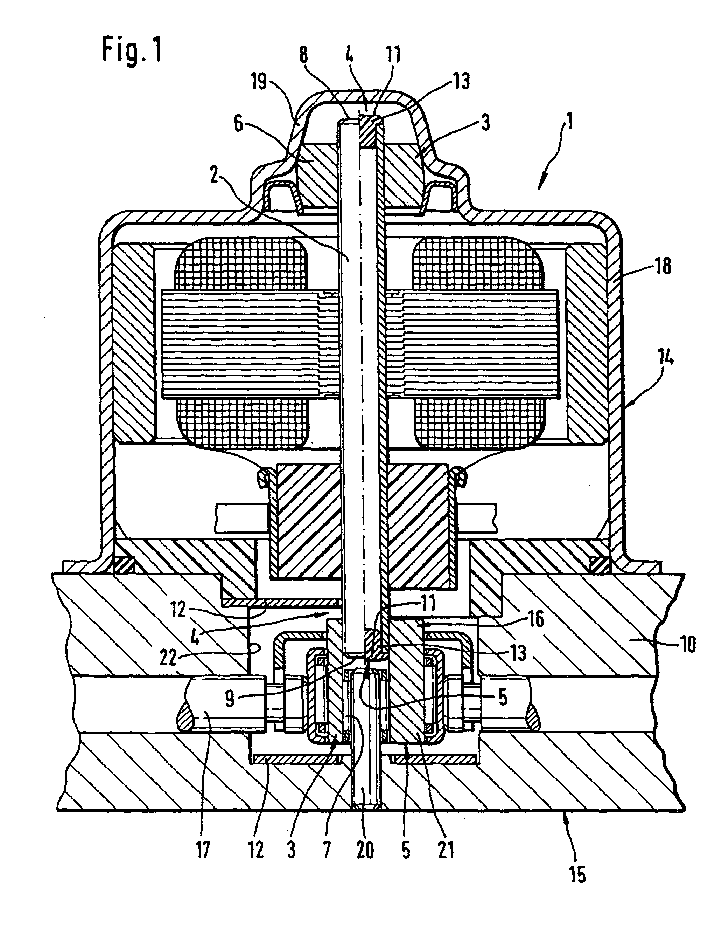

Die Fig. 1 zeigt ein Motorpumpenaggregat 1, das aus einem Elektromotor 14 und einer Radialkolbenpumpe 15 zusammengesetzt ist. Die rotatorische Bewegung des Elektromotors 14 wird mittels eines auf der Welle des Rotors 2 angeordneten Exzenters 16 in eine lineare Bewegung zum Antrieb der Pumpenkolben 17 umgesetzt. Die Rotorwelle 2 des Motorpumpenaggregats 1 ist hierzu an zwei Punkten radial gelagert. Das motorseitige Lager besteht aus einem aus Sinterwerkstoff hergestellten kalottenförmigen Gleitlager 6, welches zum einen auf der Rotorwelle 2 und zum zweiten in einem in das Motorgehäuse integriertem Lagergehäuse 19 angeordnet ist. Zur pumpenseitigen Lagerung der Rotorwelle 2 ist im Pumpengehäuse 10 eine starre Achse 20, die einen Nadelring 7 aufnimmt, angeordnet. Am pumpenseitigen Ende 9 der Rotorwelle 2 ist ein Exzenterring 21 so aufgepreßt, daß sein offenes, von der Rotorwelle 2 wegzeigendes Ende eine Hohlwelle aus bildet. Der innere Durchmesser der so entstehenden Hohlwelle ist über den Außendurchmesser des Nadelkranzes 7 geführt, so daß die Welle des Rotors 2 über den Exzenterring 21 und den Nadelring 7 an der starren Achse 20 radial gelagert ist. Die axial auf den Rotor 2 wirkenden Kräfte werden während des Normalbetriebes des Motorpumpenaggregats 1, d.h. bei Anlauf der Pumpe und während des Pumpvorgangs durch den magnetischen Zug des Motors 14 kompensiert. Um eine Kollision der Einzelteile des Motorpumpenaggregats 1 in axialer Richtung während des Normalbetriebs zu verhindern, sind die Teile mit einem entsprechenden Freiheitsgrad ausgelegt. Notlaufeigenschaften, die z.B. bei außergewöhnlichen Belastungen wie z.B. Stößen auf die Motorwelle in axialer Richtung gefordert sind, werden durch Anlaufelemente 4 gewährleistet. Hierbei übernehmen die Anlaufelemente 4 eine Notlagerung in axialer Richtung der Rotorwelle 2.

Diese Anlaufelemente 4 können hierzu verschiedenartig im Motorpumpenaggregat 1 angeordnet sein. Eine vorteilhafte Möglichkeit besteht darin, die Welle des Rotors 2 als Hohlwelle auszuführen und die Hohlwelle am oberen dem Motor zugewandten Ende 8 und am unteren der Pumpe zugewandten Ende 9 mit einem beispielsweise aus Kunststoff bestehenden Anlaufstopfen 13 zu verschließen. Diese Art der Anordnung der Anlaufelemente 4 ermöglicht es, bei axialer Belastung der Rotorwelle 2 eine axiale Notlagerung 11 durch Anlauf der Stopfen 13 an das Motorgehäuse 18. Bei axialer Belastung in entgegengesetzter Richtung wird das axiale Notlauflager 11 durch das Anlaufen der Stopfen 13 an der starren Achse 20 gebildet.

Eine zweite vorteilhafte Möglichkeit, die Anlaufelemente 4 anzuordnen, besteht darin, die Elemente im Pumpengehäuse 10 anzuordnen. Im Pumpengehäuse 10 ist eine Stufenbohrung 22 vorgesehen, in der der Rotor 2 gelagert und der Exzenter zur Bewegung der Pumpenkolben 17 angeordnet ist. Die Anlaufelemente, die z.B. als Stahlscheiben ausgeführt sein können, sind hier zum einen auf dem Boden der Stufenbohrung 22 und zum zweiten auf der Stufe der Bohrung angebracht. Notlauflager 4 werden durch die Anlaufelemente 12 und durch den Exzenterring 21 aufgebaut. Bei Belastung der Rotorwelle 2 in Richtung des Motors läuft der Exzenterring 21 gegen das Anlaufelement 12, welches auf der Stufe der Stufenbohrung 22 angeordnet ist, an. Wird die Rotorwelle 2 in entgegengesetzter Richtung belastet, läuft ebenfalls der Exzenterring 21 am auf dem Boden der Stufenbohrung 22 angeordneten Anlaufelement 12 auf.

Ein verschleiß an den Bauteilen der Notlauflager in axialer Richtung der Rotorwelle 2 wird durch verschleißfeste Werkstoffe wie z.B. Stahl oder verschleißfeste Kunststoffe verhindert.

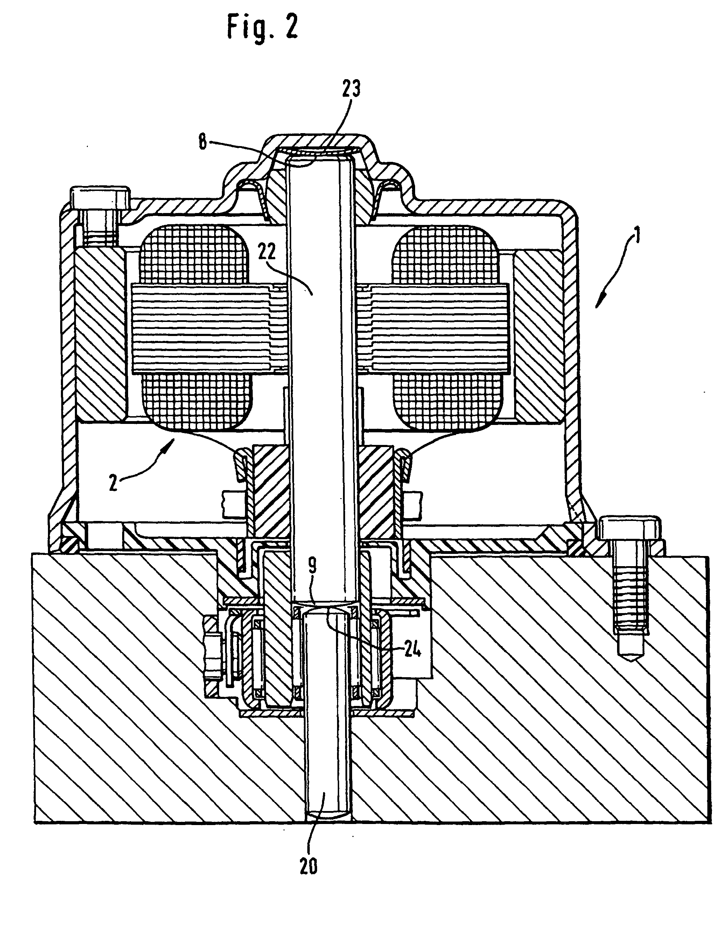

In Fig 2 ist eine spielfreie Rotorlagerung eines Motorpumpenaggregats 1 gezeigt. Die radiale Lagerung entspricht der des Ausführungsbeispiels in Fig. 1. Die pumpenseitige Lagerung des Rotorwelle 2 in axialer Richtung wird mittels einer Punktberührung der starren Achse 20 und der Welle des Rotors 2 gewährleistet. Hierzu ist das obere Ende der feststehenden Achse 20 und das untere Ende der Rotorwelle 2 mit einer Kalotte versehen, die sich an ihrem Scheitelpunkt berühren. In die entgegengesetzte Richtung stützt sich die Rotorwelle 2 gegen ein konvex geformtes und am zweiten Ende der Rotorwelle 2 anliegendes Federblech 23 ab. Die Federkraft des Bleches gewährleistet hierbei eine spielfreie Anlage der beiden Rotorwellenenden zwischen den beiden Lagerpunkten.

## Patentansprüche

1. Motor-Pumpen-Aggregat (1) zum Einsatz in einem geregelten Bremssystem mit wenigstens zwei, Wälz- oder Gleitlager umfassenden radialen Lagerstellen als Rotorlagerung für eine Rotorwelle (2), **dadurch gekennzeichnet, daß** eine Zugkraft eines Magnetfeldes eines Elektromotors (14) eine, in Axialrichtung schwimmende, Lagerung der Rotorwelle (2) im Normalbetrieb ermöglicht, und daß die Rotorwelle (2) zur Aufnahme von Spitzenbelastungen in Axialrichtung an ein Axialgleitlager (4,5) anlegbar ist.

2. Motor-Pumpen-Aggregat nach Anspruch 1, **dadurch gekennzeichnet, daß** das Axialgleitlager (4,5) aus Anlaufelementen (11,12,13) aufgebaut ist.

3. Motor-Pumpen-Aggregat nach Anspruch 1, **dadurch gekennzeichnet, daß** die magnetische Kraft des Elektromotors (14) einen gezielten Anlauf der Rotorwelle (2) auf die Anlaufelemente (11,12,13) bewirkt.

4. Motor-Pumpen-Aggregat nach Anspruch 2 oder 3, **dadurch gekennzeichnet, daß** die Anlaufelemente (11,13) an einem oberen und einem unteren Ende (8,9) der Rotorwelle (2) des Motor-Pumpen-Aggregates (1) angeordnet sind.

5. Motor-Pumpen-Aggregat nach Anspruch 1, **dadurch gekennzeichnet, daß** das Anlaufelement (12) in einem Pumpengehäuse (10) des Motor-Pumpen-Aggregates (1) angeordnet sind.

6. Motor-Pumpen-Aggregat nach Anspruch 5, **dadurch gekennzeichnet, daß** das Axialgleitlager aus einer Achse (20) als Anlaufelement und der Rotorwelle (2) aufgebaut ist, wobei die sich berührenden Wellenenden als Kalotten ausgeführt sind.

7. Motor-Pumpen-Aggregat nach Anspruch 1, **dadurch gekennzeichnet, daß** ein oberes Ende der Rotorwelle (2) punktförmig an einer konvex geformten Federscheibe (23) anliegt.

## Claims

1. Motor pump aggregate (1) for use in a controlled brake system with at least two radial mounting positions comprising roller or sliding bearings as a rotor mounting support for a rotor shaft (2),
**characterized in that** a pull force of a magnetic field of an electric motor (14) permits a mounting support, floating in an axial direction, of the rotor shaft. (2) in normal operation, and **in that** the rotor shaft (2) is movable in an axial direction into abutment on an axial sliding bearing (4, 5) to accommodate peak loads.

2. Motor pump aggregate according to claim 1,
**characterized in that** the axial sliding bearing (4, 5) is composed of stop elements (11, 12, 13).

3. Motor pump aggregate according to claim 1,
**characterized in that** the magnetic force of the electric motor (14) causes the rotor shaft (2) to specifically move into abutment with the stop elements (11, 12, 13).

4. Motor pump aggregate according to claim 2 or 3,
**characterized in that** the stop elements (11, 13) are arranged at an upper and lower end (8,.9) of the rotor shaft (2) of the motor pump aggregate (1).

5. Motor pump aggregate according to claim 1,
**characterized in that** the stop element (12) is arranged in a pump housing (10) of the motor pump aggregate (1).

6. Motor pump aggregate according to claim 5,
**characterized in that** the axial sliding bearing consists of a shaft (20) as a stop element and the rotor shaft (2), with the shaft ends which are in contact with each other being formed like a spherical cap.

7. Motor pump aggregate according to claim 1,
**characterized in that** an upper end of the rotor shaft (2) abuts in a point on a convex spring disc (23).

## Revendications

1. Ensemble moto-pompe (1) destiné à être utilisé dans un dispositif de freinage à régulation, comprenant au moins deux supports de palier radial, comportant des paliers à roulement ou à glissement, qui servent de support de rotor pour un arbre de rotor (2), **caractérisé en ce qu'**une force d'attraction d'un champ magnétique d'un moteur électrique (14) permet en fonctionnement normal un support, flottant suivant la direction axiale, de l'arbre de rotor (2), et **en ce que**, pour des pics de sollicitation, l'arbre de rotor (2) peut être appliqué suivant la direction axiale sur un palier de butée à glissement (4, 5).

2. Ensemble moto-pompe suivant la revendication 1, **caractérisé en ce que** le palier de butée à glissement (4, 5) est réalisé en partie au moyen d'éléments d'usure (11, 12, 13).

3. Ensemble moto-pompe suivant la revendication 1, **caractérisé en ce que** la force magnétique du moteur électrique (14) provoque un appui approprié de l'arbre de rotor (2) sur les éléments d'usure (11, 12, 13).

4. Ensemble moto-pompe suivant la revendication 2 ou 3, **caractérisé en ce que** les éléments d'usure (11, 13) sont disposés sur une extrémité supérieure et une extrémité inférieure (8, 9) de l'arbre de rotor (2) de l'ensemble moto-pompe (1).

5. Ensemble moto-pompe suivant la revendication 1, **caractérisé en ce que** les éléments d'usure (12) sont disposés dans un carter de pompe (10) de l'ensemble moto-pompe (1).

6. Ensemble moto-pompe suivant la revendication 5, **caractérisé en ce que** le palier de butée à glissement est constitué par un axe (20) servant d'élément d'appui et l'arbre de rotor (2), les extrémités d'arbre qui viennent en contact étant réalisées sous forme de calottes.

7. Ensemble moto-pompe suivant la revendication 1, **caractérisé en ce qu'**une extrémité supérieure de l'arbre de rotor (2) est en appui d'une manière ponctuelle sur une rondelle élastique (23) de forme convexe.
